# EUROPÄISCHE PATENTSCHRIFT

(11) **EP 0 390 020 B1**
(45) Veröffentlichungstag und Bekanntmachung des Hinweises auf die Patenterteilung: **03.08.1994**
(21) Anmeldenummer: 90105686.1
(22) Anmeldetag: 26.03.1990
(51) Int. Cl.: G11B 23/087

(54) **Andruckfeder für Bandkassetten und Bandkassetten damit**
Pressure spring for cassettes and related cassettes
Ressort de pression pour cassettes à bande et cassettes à bande associées

(30) Priorität: 31.03.1989 DE 8903934 U
(43) Veröffentlichungstag der Anmeldung: 03.10.1990
(73) Patentinhaber: BASF Aktiengesellschaft, 67063 Ludwigshafen (DE)
(72) Erfinder: Schoettle, Klaus, D-6900 Heidelberg (DE); Dreyer, Juergen, D-7608 Willstaett (DE); Riegger, Siegfried, Dr., D-7637 Ettenheim (DE); Schuhmacher, Willi, D-6340 Kippenheim (DE)

(56) Entgegenhaltungen:
- DE-U- 8 800 741
- DE-U- 8 807 993
- GB-A- 2 162 494
- US-A- 4 770 367
- PATENT ABSTRACTS OF JAPAN vol. 11, no. 19 (P-537)(2466) 20 Januar 1987,
- PATENT ABSTRACTS OF JAPAN vol. 11, no. 19 (P-537)(2466) 20 Januar 1987,& JP-A-61 192087 (TOSHIBA CORP) 26 August 1986,

## Beschreibung

Die Beschreibung betrifft eine Andruckfeder für Bandkassetten, insbesondere für Video-Magnetbandkassetten, befestigt am Kassettengehäuse, bestehend aus einem gebogenen Federblechstreifen gleicher Breite, zur federnden Belastung einer oder mehrerer Bandspulen in Richtung ihrer Betriebslage, wobei im Mittelbereich der Andruckfeder Befestigungseinrichtungen vorgesehen sind, die zur Ebene des Feder-Mittelbereichs einen Abstand aufweisen, sowie Bandkassetten mit Andruckfedern.

Mit dem DE-U-83 35 294 ist eine Andruckfeder dieser Art bekannt, bei der Ausführungen vorgesehen sind, die als Befestigungseinrichtungen entweder eine U-Biegung, halbpyramidische Sickenprägungen am Federrand oder ausgeschnittene und aufgebogene Innenlappen besitzen. Während die U-Biegung zum Einhängen in Fenstereinschnitten gedacht war, waren die Sickenprägungen und Innenlappen dazu bestimmt, am Kassettengehäuse mittels Schweißens angebracht zu werden. Eine eindeutige Ausrichtung der Andruckfeder und ihre Befestigung in einer Großserienfertigung ist damit nicht realisierbar.

Mit der US-A-4 770 367 ist eine schmale Andruckfeder bekannt, die im Mittelbereich zwei Befestigungslöcher aufweist und an jedem Federarm zwei querliegende Abbiegungsknicke besitzt. Die Befestigungslöcher sind Stanzlöcher und bei jeder Federbefestigung durch Schweißen oder thermisches Nieten ist erforderlich, daß Material über die Oberfläche des Feder-Mittelbereichs heraustritt, was aber aufgrund der engen Raumverhältnisse im Kassetteninnern zum Anlaufen der Spulenflansche und zu gravierenden Funktionsstörungen beim Betrieb der Kassette führen kann. Aufwölbungen der Feder selbst können ebenfalls den Spulenfreiraum einengend wirken. Die Abbiegungsknicke verleihen der Feder eine nichtlineare Federcharakteristik, die nachteilig für die Funktion der Kassette ist.

Es sind auch ähnliche Federausführungen mit Querknicken in der EP-A-272 556 beschrieben, wobei eine Einloch-Befestigung einmal zu Drehungen der Feder führen und durch den obenerwähnten Materialaustritt ebenfalls ein Anlaufen der Spulenflansche unvermeidbar auftreten kann. Durch den jeweils jedem Federende nächstliegenden Knick soll eine Verkürzung des wirksamen Federarmes erreicht werden, im wesentlichen, um die an der Einloch-Befestigung auftretenden Reaktions-Federkräfte sowie die Breite, Dicke des Federmaterials und die Höhe einer Abkröpfung der Feder zu verringern. Dadurch wird ebenfalls eine nichtlineare Federcharakteristik erreicht.

Mit dem DE-U-88 07 993 ist eine weitere, gegebenenfalls mit Querknicken versehene Andruckfeder bekannt, die im Mittelbereich mit am Kassettengehäuse angespritzten Führungselementen, die den Längskanten der Feder zugeordnet sind, aufweisen und die mittels eines einzigen Befestigungslochs und eines an der Gehäusewand angespritzten Niets durch thermisches Nieten befestigbar ist. Die oben zur EP-A-272 556 geltend gemachten Nachteile gelten auch hier. Außerdem können auch querliegende, beiderseits in der unmittelbaren Nähe der Nietbefestigung an der Kassettenwandung ausgebildete Stützstege zur Abstützung und Aufrechterhaltung eines gerundet ausgebildeten Federmittelteils vorgesehen sein. Die Herstellung der Führungselemente und Stützstege am Gehäuse, die relativ genau angeordnet und ausgebildet sein müssen, ist sehr aufwendig.

Die GB-A-2 162 494 beschreibt eine Andruckfeder für eine Bandkassette, die aus parallel zueinander ausgebildeten, etwa gleichlangen Befestigungsarmen und Andruckarmen gebildet ist, wobei letztere aus einem flachen Feder-Mittelbereich und daran anschließende, kontinuierlich gebogenen Federarmen besteht.

Die Befestigungsarme sind an ihren äußersten Enden an der Kassette befestigt. Befestigungsarme und Andruckarme können einstückig hergestellt oder im Mittelbereich durch einen Niet verbunden sein.

Es ist Aufgabe der Erfindung, eine schmale, gebogene, nicht geknickte Andruckfeder und eine Bandkassette damit bereitzustellen und mit Befestigungseinrichtungen für die Bandkassette zu versehen, womit eine Ausrichtung der Feder ermöglicht sowie eine störungsfreie Spulenbewegung gewährleistet wird.

Diese Aufgabe wird mit einer Andruckfeder für Bandkassetten, insbesondere für Video-Magnetbandkassetten, am Kassettengehäuse direkt befestigt, bestehend aus einem gebogenen Federblechstreifen gleicher Breite, zur federnden Belastung einer oder mehrerer Bandspulen in Richtung ihrer Betriebslage, wobei im flachten Mittelbereich der Andruckfeder Befestigungseinrichtungen vorgesehen sind, die zur Ebene des Feder-Mittelbereichs einen Abstand aufweisen, erfindungsgemäß gelöst mit
a) zwei am Feder-Mittelbereich anschließenden, gebogenen Federarmen mit jeweils kontinuierlicher Biegungskurve
b) zumindest einer Durchbrechung und einem diese umgebenden Befestiungskragen als Befestiungseinrichtungen.

Damit wird eine lineare Federcharakteristik in Verbindung mit einfacher Herstellung, einfacher Befestigung und problemloser Andruckfunktion und Spulenfunktion erreicht.

In weiterer Ausbildung entspricht der Radius der Biegungskurve der Federarme etwa der Länge des flachen Mittelbereichs. Dadurch ergibt sich eine einfach herstellbare Feder-Grundform in unbelastetem Zustand.

In praktischer Ausbildung kann eine langlochartige Durchbrechung mit vertieftem, ovalförmigen Befestiungskragen in der Mitte des Feder-Mittelbereichs vorgesehen sein.

Damit ergibt sich das Minimum einer nicht drehgefährdeten Federbefestigung durch eine langgestreckte Befestigungsbasis wie auch in folgender Ausführung mit zwei Kreisdurchbrechungen auf der Mittelängsachse des Feder-Mittelbereiches.

In besonders zweckmäßiger Ausbildung soll der Abstand des zumindest einen Befestiungskragens von der Unterseite des Feder-Mittelbereichs zwischen etwa der 1-fachen und 3-fachen, insbesondere etwa der 1,6-fachen Dicke des Federblechstreifens entsprechen.

Damit wird eine ausreichende Ausricht-Sicherheit und Befestigungsstabilität erreicht. Im weiterer Ausbildung ist es vorteilhaft, wenn die Federkennlinie zumindest im Bereich der praktischen Federarmauslenkungen im wesentlichen eine Gerade ist, die insbesondere im Bereich von Federarm-Auslenkungen zwischen 2 und 7 mm eine Steigung von ca. 6 % aufweist. Damit wird eine optimale Federcharakteristik bei minimalem Einsatz von Material- und Zusammenbaukosten erreicht.

Mit einer erfindungsgemäßen Bandkassette, insbesondere Video-Magnetbandkassette mit einem Gehäuse, an dessen einer großen Wandung eine Andruckfeder mittig direkt befestigt ist, um mit einer oder mehreren Magnetbandspulen, die durch die Andruckfeder in Richtung ihrer Betriebslage federnd belastet wird bzw. werden, wobei die Andruckfeder aus einem gebogenen Federblechstreifen gleicher Breite besteht und im flachen Feder-Mittelbereich Befestigungseinrichtungen mit Abstand zur Ebene des Feder-Mittelbereichs vorgesehen sind, wird die gestellte Aufgabe gelöst durch
a) zwei am Feder-Mittelbereich anschließende gebogene Federarme mit kontinuierlicher Biegungskurve
b) zumindest eine Durchbrechung und einen diese umgebenden vertieften Befestiungskragen als Befestiungseinrichtungen
c) zumindest eine dem Befestigungskragen der Andruckfeder entsprechende Aufnahme-Ausnehmung in oder an der großen Gehäusewandung.

In weiterer praktischer Ausbildung der Kassetten kann die Aufnahme-Ausnehmung eine Ringnut sein, die einen durch die Durchbrechung der Andruckfeder passenden Nietzapfen umgibt.

Bei der Dimensionierung soll sichergestellt sein, daß der Nietzapfen im Volumen so bemessen ist, daß nach dem Einsetzen des Befestigungsrandes in die Zugnut und nach dem Einnieten das Kunststoffmaterial des Nietzapfens nicht oder nur unwesentlich über die Oberfläche des Mittelbereichs der Andruckfeder hervorsteht. Diese Maßnahme verhindert in jedem Fall, auch bei taumelnden Spulenbewegungen, die aufgrund von Toleranzsummierungen in der Kassette nicht auszuschließen sind, ein Anlaufen der Spulen und damit das Auftreten gravierender Spulen- und Bandlaufstörungen im Kassettenbetrieb.

In weiterer Ausgestaltung der Bandkassette können in Mittellängsrichtung an der großen Gehäusewandung Rippen oder Stege oder Erhöhungen vorgesehen sein, wobei die Andruckfeder dieselben überdeckend an der großen Gehäusewandung befestigt ist.

Dadurch ist es möglich, die große Gehäusewandung ganz oder teilweise zur Materialersparnis dünner auszubilden unter Beibehaltung der Lagerungs- und Raumverhältnisse für die Andruckfeder.

Dabei kann die Gesamtlänge der Rippen, Stege oder Erhöhungen so gewählt werden, daß diese etwa dreiviertel der Länge der gestreckten Andruckfeder entspricht. Es kann aber auch die Gesamtlänge der Rippen, Stege oder Erhöhungen etwa vierfünftel der Projektion der Länge der unbelasteten, gebogenen Andruckfeder entsprechen. Damit wird eine definierte Federdurchbiegung erreicht.

In weiterer Ausbildung der Bandkassette kann die Höhe der Rippen, Stege oder Erhöhungen an der großen Gehäusewandung etwa dem Abstand des Befestiungskragens von der Unterseite des Feder-Mittelbereichs entsprechen, so daß die Rippen, Stege oder Erhöhungen mit der Aufnahme-Ausnehmung ausbildbar sind.

Zweckmäßig kann die Bandkassette an der großen Gehäusewandung in einem Querbereich zur Andruckfeder Verstärkungstege mit Abstand zu letzterer aufweisen. Dadurch kann die Wandung zur Aufnahme der Federkräfte der Andruckfeder verstärkt werden und abhängig von der Elastizität des verwandten Kunststoffmaterials und der Stärke der Wandung kann die Durchbiegung der Gehäuseaußenseite begrenzt werden.

Bei einer Bandkassette, insbesondere Video-Magnetband-Kassette mit einem Gehäuse, an dessen einer großen Wandung eine Andruckfeder mittig befestigt ist, und mit einer oder mehreren Magnetbandspulen, die durch die Andruckfeder in Richtung ihrer Betriebslage federnd belastet wird bzw. werden, wobei die Andruckfeder aus einem Federblechstreifen geringer Breite besteht und im Feder-Mittelbereich Befestigungseinrichtungen vorgesehen sind, kann es in Hinsicht auf Materialeinsparungen und/oder die Verwendung wirtschaftlichen Materials generell vorteilhaft sein, Verstärkungsstege an der großen Gehäusewandung im wesentlichen quer zur Andruckfeder mit Abstand dazu vorzusehen. Für Videokassetten können diese Verstärkungsstege insbesondere eine Dicke zwischen etwa 1 bis 2 mm aufweisen.

Ausführungsbeispiele der Erfindung sind der folgenden Beschreibung und den Zeichnungen zu entnehmen, letztere zeigen
- Figur 1: eine schematische Videokassette mit einer erfindungsgemäßen Andruckfeder
- Figur 2: einen Längsschnitt durch eine Videokassette mit der Andruckfeder nach Figur 1
- Figur 3: die Andruckfeder gemäß Figur 2 in Seitenansicht und Draufsicht
- Figur 4: eine weitere Andruckfeder in Seitenansicht und Draufsicht
- Figur 5, Figur 6: jeweils ein Querschnitt durch eine Andruckfeder und ihre Befestigungselemente an der großen Kassettenwandung
- Figur 7: die Federcharakteristik der erfindungsgemäßen Andruckfeder im Vergleich mit der einer bekannten Andruckfeder mit jeweils zweimal geknickten Federarmen.
- Figur 8: eine zweckmäßig befestigte Feder an einem Wandteil
- Figur 8A, 8B: Zapfendarstellungen für die Ausführung der Figur 8

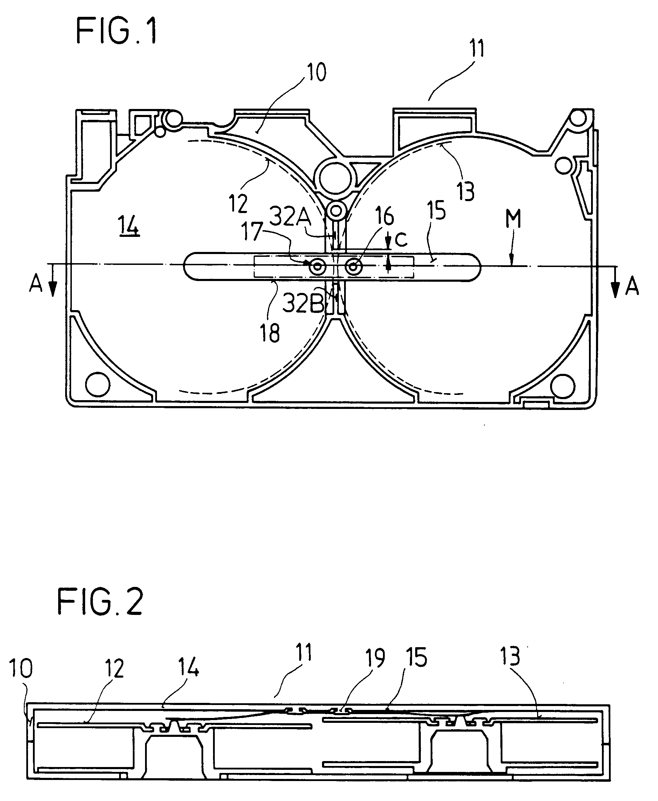

Figur 1 zeigt ein Oberteil 10 des Gehäuses 11 einer Videokassette mit gestrichelt angedeuteten Flanschspulen 12 und 13, die in der Mitte der großen Gehäusewandung 14 sehr dicht (in der Realität einer VHS-Cassette etwa 2 mm) zueinander angeordnet sind. Eine schmale, zweiarmige Andruckfeder 15 ist mit zwei Kreisdurchbrechungen oder -löchern 16 und diese umgebenden Kragen 17 zur Befestigung an der Wandung 14 vorgesehen. Die Feder 15 erstreckt sich mittig, entlang der Mittellängsachse M des Gehäuses 11. Verstärkungsstege 32 A und 32 B können auf der Quermittelachse des Gehäuses 11 vorgesehen sein wie noch beschrieben wird.

Strichpunktiert ist unter der Feder 15 ein Steg 18 vorgesehen, der auch mehrteilig sein kann oder aus Rippen oder Erhöhungen bestehen kann.

Figur 2 zeigt einen Längsschnitt gemäß A-A der Mittelängsachse M, allerdings mit einem vollständigen Gehäuse 11, mit den realen zwei Spulen 12 und 13, ohne den Steg 18, aber mit der Feder 15, die mit den Federarmenden die Spulen 12 und 13 mittig belastet.

Während die Spule 12 in ihrer untersten Position dargestellt ist, ist die Spule 13 in der obersten Lage gezeigt. Mittels Schweißnieten 19 ist die Feder 15 an der Wandung 14 des Oberteils 10 befestigt, und es ist erkennbar, daß kein oder im wesentlichen kein Schweißmaterial über die obere Fläche der Feder 15 genauer des Feder-Mittelbereichs oder Feder-Mittelteils 20, hervorragt. Es ist ebenfalls deutlich, daß die oberen Flansche der Spulen 12 und 13 den Schweißnieten 19 der Feder 15 sehr nahe kommen und die Drehung der Spulen 12 und 13 behindert werden kann evt. durch Verkanten im Gehäuse 11, wenn die Nieten 19 über die Fläche der Feder 15 hervorstehen.

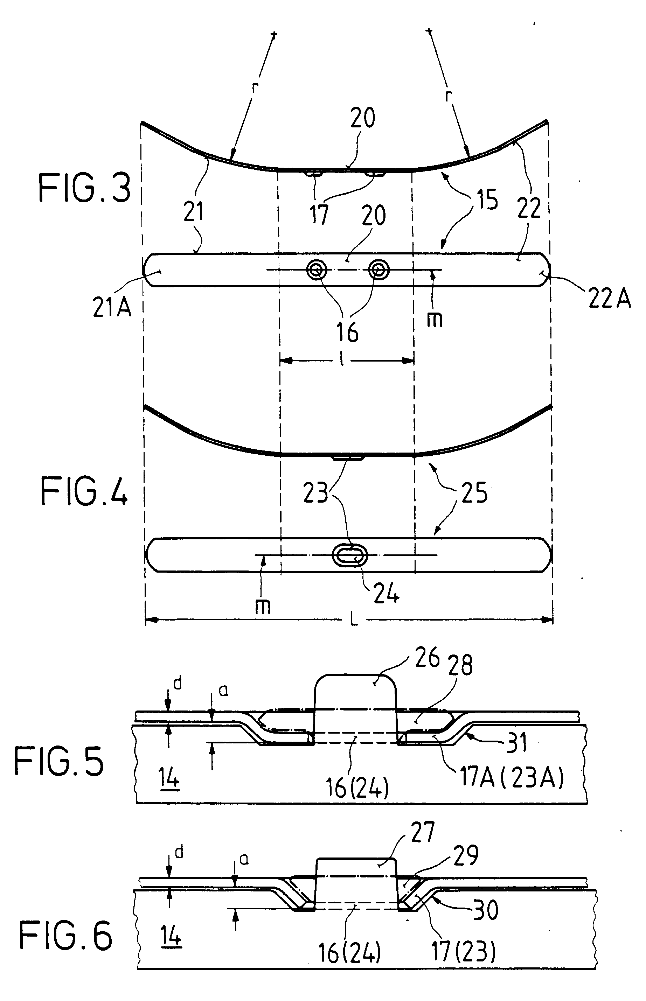

Die Form der Feder 15 geht aus Figur 3 hervor. Die Feder 15 besteht, wie auch die Feder 25, aus dem Feder-Mittelteil 20, den gebogenen Federarmen 21 und 22 und den Federarmenden 21 A und 22 A, in deren Nähe die Andruckpunkte für die Spulenmitten liegen. Die Kreislöcher 16 sind auf der Mittelachse m der Feder 15 angeordnet, um das Material in diesem Bereich nicht mehr als notwendig zu schwächen. Umgeben sind die Kreislöcher 16 durch die vertieften Kreisring-Kragen 17, die, wie der Ovalkragen 23 der Feder 25 in Figur 4, der Federbefestigung dienen. Der Ovalkragen 23 umgibt das Langloch 24 der Feder 25. Die Längsausdehnung des Langlochs 24 kann auch noch vergrößert werden, um die Längsbasis der Befestigung, die Sicherheit gegen unbeabsichtigte Federdrehung bietet, zu vergrößern.

Über die Länge l ist der Feder-Mittelteil 20, wie erkennbar, flach ausgebildet, was wie die übrigen Dimensionierungsangaben natürlich auch für die Feder 25 entsprechend gilt. Zweckmäßig ist der Biegungsradius r der Federarme 21 und 22 etwa so groß wie die Länge l des Mittelteils 20 gewählt. Die Biegung wird praktisch so durchgeführt, daß die Federspannung der Federblechstreifen erhalten bleibt.

Die Kragen 17 und 23 können beispielsweise, wie in Figuren 5 und 6 gezeigt, ausgebildet sein. Durch den Kreis- oder Langlochdurchbruch 16 bzw. 23 tritt ein Nietzapfen 26 oder 27, der, wie strichpunktiert in beiden Fällen angedeutet, ein Volumen aufweisen soll, daß höchstens gerade die bei eingesetztem Kragen 17, 23 noch freigebliebene Vertiefung 28 bzw. 29 mit Material ausgefüllt wird.

Der Kragen 17 A bzw. 23 A in Figur 5 ist leicht trogförmig ausgebildet. Es sind jedoch auch andere geeignete Querschnittsformen für diese Kragen verwendbar. Die Aufnahme-Ausnehmungen 30 und 31 sind entsprechend den zugehörigen Kragenausbildungen geformt und sie können jeweils bei der Herstellung der großen Gehäusewandung 14 mit angeformt sein.

Der Abstand a der Kragen 17 (23), 17 A (23 A) von der Unterseite des Feder-Mittelteils 20 ist in beiden Fällen der Figuren 5 und 6 etwa 2,5-fach so groß wie die Federblechdicke d. In der Praxis hat sich ein Wert von a ∼ 1,6 d bewährt, er sollte im Bereich zwischen etwa dem 1-fachen und 3-fachen der Dicke d liegen.

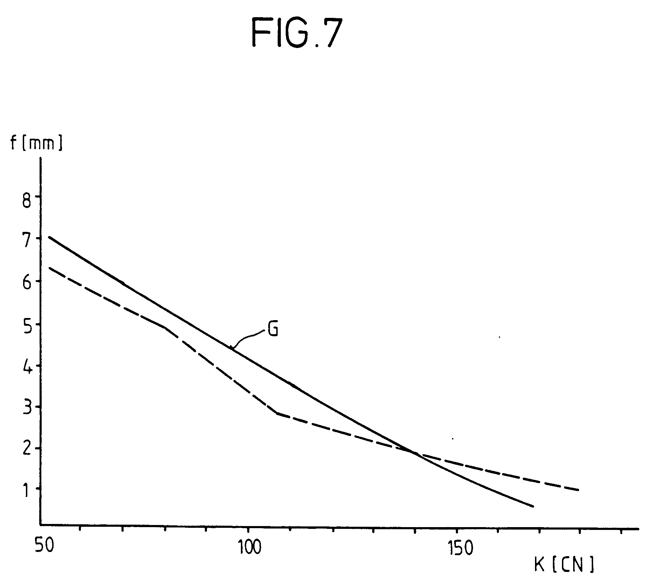

In Figur 7 ist ein Federkennlinien-Diagramm dargestellt. Auf die Ordinate ist der Abstand "f" des Federarmendes vom Kassettenboden in Millimieter (mm) und auf der Abrisse die gemessene Federkraft "K" in centi-Newton (cN) aufgetragen.

Dabei zeigt die gestrichelte Kennlinie eine Feder mit jeweils zwei Querknicken an jedem Federarm gemäß US-PS 4 770 367. Die Kennlinie hat deutlich nichtlineare Bereiche, die technisch einleuchtend entstehen, wenn die Knicke jeweils die Innenwand der Kassette berühren und zur Anlage kommen.

Demgegenüber zeichnet sich die ausgezogene Federkennlinie einer erfindungsgemäßen Feder 15 oder 25 durch den linearen Verlauf einer Gerade G zumindest im Bereich von 2 bis 7 mm aus und besitzt eine Steigung von ca. 6 %, wodurch eine linear anwachsende Federkraft realisiert wird.

Durch solche lineare Federkräfte kann etwaigen, unnormalen Spulenbewegungen wie beispielsweise Taumeldrehungen entgegengewirkt werden.

Die Gesamtlänge des Stegs 18 oder der Rippen oder Erhöhungen in Figur 1 kann etwa 4/5 der Projektionslänge L der Federn 15 und 23 entsprchen, sie können in bezug auf die gestreckte Länge der Federn 15 und 25 auch 3/4 dieser Länge besitzen. In jedem Fall ergibt sich bei Verwendung solcher Stege, Rippen oder Erhöhungen auch eine Variationsmöglichkeit für die Einstellung der wirksamen Federkräfte.

In Figur 1 sind in der Mitte der großen Gehäusewandung 14 Verstärkungsstege 32 A und 32 B vorgesehen, die mindestens eine Höhe der Federdicke entsprechend oder größer aufweisen können und die eine Breite zwischen etwa 1 bis 2 mm aufweisen und einen Abstand zu den Längsseiten der Feder von ca. 0,2 - 0,5 mm besitzen können, da Führungs- und Positionierungszwecke nicht unbedingt erreicht werden müssen. Diese Stege 32 A und 32 B, die eigentlich ein geteilter Steg sind, können auch in Mehrzahl und in Winkellage zur Feder, sollten jedoch etwa symmetrisch dazu und zur Quermittelachse vorgesehen sein. Mittels solcher Verstärkungsstege kann die Wandungsdurchbiegung in Grenzen gehalten werden bei minimaler Wandungsdicke.

Vor Befestigen der erfindungsgemäßen Feder durch Schweißen oder Nieten ist es bei einer Serienfertigung notwendig, die Feder erst einmal in das Oberteil 10 des Gehäuses einzubringen und in definierter Lage zu halten, damit die Befestigung orts- und lagerichtig stattfinden kann. Da das Volumen der Schweiß- oder Nietzapfen 26 oder 27 jedoch möglichst gering gehalten werden soll, aus Platzgründen innerhalb der Kassette, ist die Länge der Zapfen 26 und 27 auch möglichst klein. Damit wächst jedoch die Gefahr, daß die Feder kippt und in Kipplage befestigt wird.

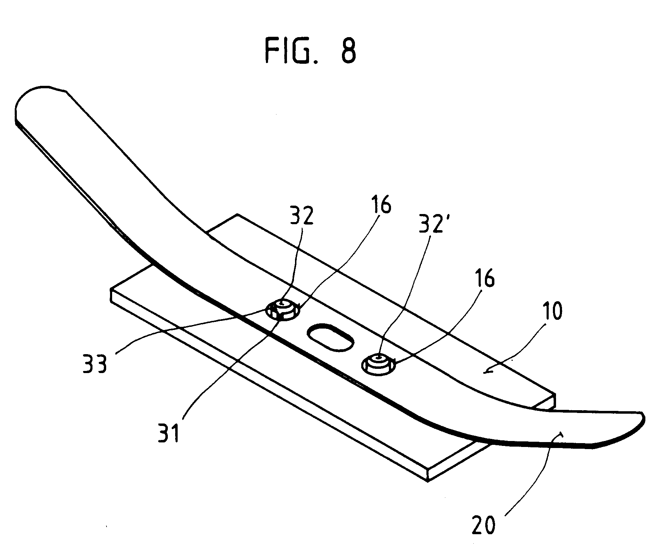

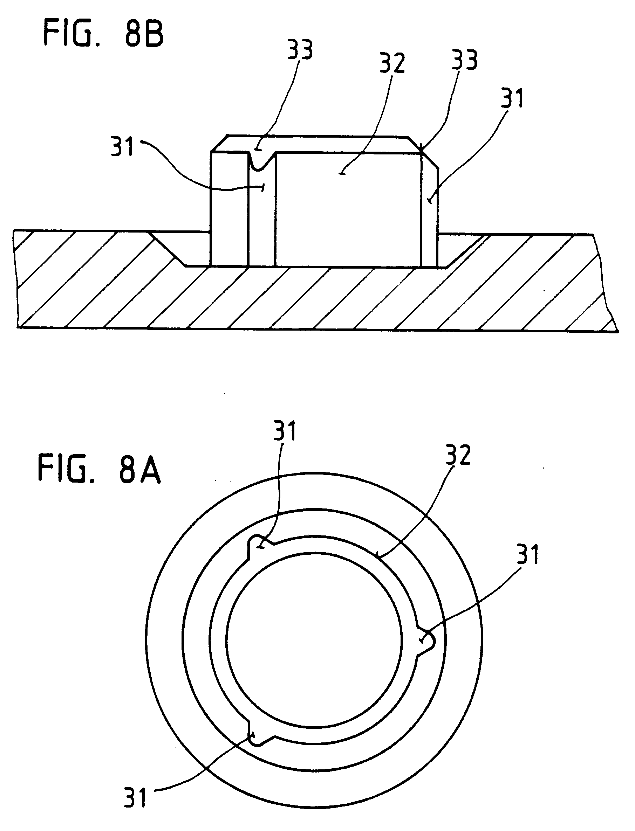

Als Abhilfe wird der Zapfen 26 oder 27, der üblicherweise zylinderisch, also mit Kreisquerschnitt, ausgebildet ist, mit mindestens einer Hilfsrippe 31 am Außenumfang oder Vorzugsweise mit drei um ca. 120°C versetzt angeordneten Hilfsrippen 31 versehen, wie in Figur 8 und 8 A, B am Beispiel eines Zapfens 32 gezeigt.

Der Zapfen 32 ist mit einer Einführschräge 33 (Anfasung) ausgebildet, die bis zu der die Hilfsrippe(n) 31 reicht (reichen).

Bei entsprechender Durchmesserauslegung des Zapfens 32 und der Kreislöcher 16 der Feder 20 erfolgt eine Klemmung der Feder 20 auf dem Zapfen 32, wenn die Kreisöffnungen 16 über die Zapfen 32, 26, 10 gebracht werden und die Feder 20 bis zur Auflagefläche des Oberteils 10 angedrückt wird.

Die Feder 20 wird somit bereits durch einen einzigen, mit der oder den Hilfsrippen 31 ausgebildeten Zapfen 32 ausreichend festgehalten, sogar für weitere Transportvorgänge, z. B. zur Schweiß- oder Nietstation, so daß die Fertigungssicherheit deutlich erhöht wird.

Selbstverständlich können auch beide Zapfen 32 und 32' mit mindestens einer oder drei Hilfsrippen 31 versehen sein. Die Form der Hilfsrippe 31 ist in Figur 8A leicht dreieckförmig mit abgerundeten Kanten gewählt. Die Hilsrippe 31 kann jedoch auch eine andere geeignete Form besitzen.

## Patentansprüche

1. Andruckfeder für Bandkassetten, insbesondere für video-Magnetbandkassetten, am Kassettengehäuse direkt befestigt, bestehend aus einem gebogenen Federblechstreifen gleicher Breite, zur federnden Belastung einer oder mehrerer Bandspulen in Richtung ihrer Betriebslage, wobei im flachen Mittelbereich (20) der Andruckfeder (15, 25) Befestigungseinrichtungen vorgesehen sind, die zur Ebene des Feder-Mittelbereichs einen Abstand aufweisen, gekennzeichnet durch
a) zwei am Feder-Mittelbereich anschließende, gebogene Federarme (21,22) mit kontinuierlicher Biegungskurve (r)
b) zumindest eine Durchbrechung (16,24) und einen diese umgebenden, vertieften Befestigungskragen (17, 17 A, 23, 23 A) als Befestigungseinrichtungen.

2. Andruckfeder nach Anspruch 1, dadurch gekennzeichnet, daß der Radius (r) der Biegungskurve der Federarme (21, 22) etwa der Länge (l) des flachen Feder-Mittelbereichs (20) enstpricht.

3. Andruckfeder nach Anspruch 1 oder 2, dadurch gekennzeichnet, daß eine langlochartige Durchbrechung (24) mit vertieftem, ovalförmigen Befestigungskragen (23, 23 A) in der Mitte des Feder-Mittelbereichs (20) vorgesehen ist.

4. Andruckfeder nach Anspruch 1 oder 2 oder 3, dadurch gekennzeichnet, daß zwei Kreisdurchbrechungen (16) mit vertieften kreisringförmigen Befestigungskragen (17, 17 A) auf der Mittellängsachse (m) des Feder-Mittelbereichs (20) vorgesehen sind.

5. Andruckfeder nach Anspruch 1 und einem oder mehreren der Ansprüche 2 bis 4, dadurch gekennzeichnet, daß der Abstand (a) des zumindest einen Befestigungskragens (17, 17A, 23, 23A) von der Unterseite des Feder-Mittelbereichs (20) zwischen etwa der einfachen und dreifachen, insbesondere etwa der 1,6-fachen Dicke (d) des Federblechstreifens entspricht.

6. Andruckfeder nach Anspruch 1 und einem oder mehreren der Ansprüche 2 bis 5, dadurch gekennzeichnet, daß die Federkennlinie (Fig. 7) der Andruckfeder (15, 25) zumindest im Bereich der praktischen Federarmauslenkungen im wesentlichen eine Gerade (G) ist.

7. Andruckfeder nach Anspruch 6, dadurch gekennzeichnet, daß die Federkennlinie (Gerade G, Fig. 7) im Bereich von Federarmauslenkungen zwischen 2 und 7 mm eine Steigung von etwa 6 % aufweist.

8. Bandkassette, insbesondere Video-Magnetband-Kassette mit einem Gehäuse (11), an dessen einer großen Wandung (14) eine Andruckfeder (15, 25) mittig direkt befestigt ist, und mit einer oder mehreren Magnetbandspulen (12, 13), die durch die Andruckfeder (15, 25) in Richtung ihrer Betriebslage federnd belastet wird bzw. werden, wobei die Andruckfeder aus einem gebogenen Federblechstreifen gleicher Breite besteht und im flachen Feder-Mittelbereich Befestigungseinrichtungen mit Abstand zur Ebene des Feder-Mittelbereichs vorgesehen sind, gekennzeichnet durch
a) zwei am Feder-Mittelbereich anschließende, gebogene Federarme (21, 22) mit kontinuierlicher Biegungskurve (r)
b) zumindest eine Durchbrechung (16, 24) und einen diese umgebenden, vertieften Befestigungskragen (17, 17 A, 23, 23 A) als Befestigungseinrichtungen.
c) zumindest eine dem Befestigungskragen (17, 17 A, 23, 23 A) entsprechende Aufnahme-Ausnehmung (30, 31) in oder an der großen Gehäusewandung (14)

9. Kassette nach Anspruch 8, dadurch gekennzeichnet, daß die Aufnahme-Ausnehmung (30, 31) eine Ringnut ist, die um einen durch die Durchbrechung (16, 24) der Andruckfeder (15, 25) passenden Nietzapfen (26, 27) vorgesehen ist.

10. Kassette nach Anspruch 9, dadurch gekennzeichnet, daß der Nietzapfen (26, 27) im Volumen so dimensioniert ist, daß nach dem Einsetzen des Befestigungsrandes in die Ringnut und nach dem Einnieten das Kunststoffmaterial (28, 29) des Nietzapfens (26, 27) nicht über die Oberfläche des Mittelbereichs (20) der Andruckfeder (15, 25) hervorsteht.

11. Kassette nach Anspruch 8 oder einem der Ansprüche 9 und 10, dadurch gekennzeichnet, daß in Mittellängsrichtung an der großen Gehäusewandung (14) Rippen oder Stege (18) oder Erhöungen vorgesehen sind, und die Andruckfeder (15, 25) diese überdeckend an der großen Gehäusewandung (14) befestigt ist.

12. Kassette nach Anspruch 11, dadurch gekennzeichnet daß die Gesamtlänge der Rippen, Stege (18) oder Erhöhungen etwa dreiviertel der Länge (L) der gestreckten Andruckfeder (15, 25) entspricht.

13. Kassette nach Anspruch 11, dadurch gekennzeichnet, daß die Gesamtlänge der Rippen, Stege oder Erhöhungen etwa vierfünftel der Projektion der Länge (L) der unbelasteten, gebogenen Andruckfeder (15, 25) entspricht.

14. Kassette nach Anspruch 11 oder 12, dadurch gekennzeichnet, daß die Höhe der Rippen, Stege (18) oder Erhöhungen an der großen Gehäusewandung (14) etwa dem Abstand (a) des Befestigungskragens (17, 17A, 23, 23A) von der Unterseite des Feder-Mittelbereichs (20) entspricht.

15. Kassette nach Anspruch 8 oder einem oder mehreren der Ansprüche 9 bis 14, dadurch gekennzeichnet, daß an der großen Gehäusewandung (14) in einem Querbereich zur Andruckfeder (15, 25) Verstärkungsstege (32A, 32B) vorgesehen sind, die zur Andruckfeder (15, 25) einen Abstand (c) aufweisen.

16. Bandkassette nach Anspruch 15, dadurch gekennzeichnet, daß die Verstärkungsstege (32A, 32B) eine Dicke zwischen etwa 1 bis 2 mm aufweisen.

17. Bandkassette nach Anspruch 8 oder einen der Ansprüche 9 bis 16, dadurch gekennzeichnet, daß der Nietzapfen (32) mindestens eine Hilfsrippe (31), insbesondere drei um ca. 120° versetzt angeordnete Hilfsrippen (31) aufweist.

18. Bandkassette nach Anspruch 17, dadurch gekennzeichnet, daß nur einer von zwei Nietzapfen (32, 32') die mindestens eine Hilfsrippe (31) aufweist.

## Claims

1. A pressure spring for tape cassettes, in particular for video magnetic tape cassettes, directly fastened to the cassette housing and consisting of a curved spring steel strip of uniform width, for spring loading one or more tape reels in the direction of their operating position, the flat central region (20) of the pressure spring (15, 25) being provided with fastening means which are a distance away from the plane of the central region of the spring, comprising
a) two curved spring arms (21, 22) adjacent to the central region of the spring and having a continuous curve (r), and
b) at least one hole (16, 24) and an indented fastening collar (17, 17A, 23, 23A) surrounding said hole, as fastening means.

2. A pressure spring as claimed in claim 1, wherein the radius (r) of the curve of the spring arms (21, 22) corresponds roughly to the length (l) of the flat central region (20) of the spring.

3. A pressure spring as claimed in claim 1 or 2, wherein a slot-like hole (24) having an indented, oval-shaped fastening collar (23, 23A) is provided in the middle of the central region (20) of the spring.

4. A pressure spring as claimed in claim 1 or 2 or 3, wherein two circular holes (16) having indented, annular fastening collars (17, 17A) are provided along the central longitudinal axis (m) of the central region (20) of the spring.

5. A pressure spring as claimed in claim 1 and one or more of claims 2 to 4, wherein the distance (a) from the one or more fastening collars (17, 17A, 23, 23A) to the lower side of the central region (20) of the spring is from about one to three times, in particular about 1.6 times, the thickness (d) of the spring steel strip.

6. A pressure spring as claimed in claim 1 and one or more of claims 2 to 5, wherein the spring characteristic (Fig. 7) of the pressure spring (15, 25) is essentially a straight line (G), at least in the region of the spring arm deflections encountered in practice.

7. A pressure spring as claimed in claim 6, wherein the spring characteristic (straight line G, Fig. 7) in the region of the spring arm deflections of from 2 to 7 mm has a slope of about 6%.

8. A tape cassette, in particular a video magnetic tape cassette, having a housing (11) on one large wall (14) of which a pressure spring (15, 25) is directly fastened in the center, and having one or more magnetic tape reels (12, 13) which is or are spring loaded by the pressure spring (15, 25) in the direction of its or their operating position, the pressure spring consisting of a curved spring steel strip of uniform width and the flat central region of the spring being provided with fastening means at a distance from the plane of the central region of the spring, comprising
a) two curved spring arms (21, 22) adjacent to the central region of the spring and having a continuous curve (r),
d) at least one hole (16, 24) and an indented fastening collar (17, 17A, 23 23A) surrounding said hole, as fastening means, and
c) at least one holding recess (30, 31) corresponding to the fastening collar (17, 17A, 23 23A), in or on the large housing wall (14).

9. A cassette as claimed in claim 8, wherein the holding recess (30, 31) is an annular groove which is provided around a rivet peg (26, 27) which fits through the hole (16, 24) in the pressure spring (15, 25).

10. A cassette as claimed in claim 9, wherein the rivet peg (26, 27) has a volume such that, after insertion of the fastening edge in the annular groove and after riveting, the plastic material (28, 29) of the rivet peg (26, 27) does not project beyond the surface of the central region (20) of the pressure spring (15, 25).

11. A cassette as claimed in claim 8 or either of claims 9 and 10, wherein ribs or webs (18) or protuberances are provided in the central longitudinal direction on the large housing wall (14), and the pressure spring (15, 25) is fastened to the large housing wall (14) and covers said ribs, webs or protuberances.

12. A cassette as claimed in claim 11, wherein the total length of the ribs, webs (18) or protuberances is about three fourths of the length (L) of the extended pressure spring (15, 25).

13. A cassette as claimed in claim 11, wherein the total length of the ribs, webs or protuberances is about four fifths of the projected length (L) of the curved pressure spring (15, 25) in the unloaded state.

14. A cassette as claimed in claim 11 or 12, wherein the height of the ribs, webs (18) or protuberances on the large housing wall (14) corresponds roughly to the distance (a) from the fastening collar (17, 17A, 23, 23A) to the lower side of the central region (20) of the spring.

15. A cassette as claimed in claim 8 or one or more of claims 9 to 14, wherein reinforcing webs (32A, 32B) which are a distance (c) away from the pressure spring (15, 25) are provided on the large housing wall (14) in a transverse region with respect to the pressure spring (15, 25).

16. A tape cassette as claimed in claim 15, wherein the reinforcing webs (32A, 32B) have a thickness of about 1-2 mm.

17. A tape cassette as claimed in claim 8 or any of claims 9 to 16, wherein the rivet peg (32) has one or more auxiliary ribs (31), in particular three auxiliary ribs (31) arranged at intervals of about 120°.

18. A tape cassette as claimed in claim 17, wherein only one of two rivet pegs (32, 32') has one or more auxiliary ribs (31).

## Revendications

1. Ressort de pressage pour cassettes à bande, en particulier pour cassettes à bandes magnétiques vidéo, fixées directement sur le boîtier de cassette, constitué d'une bande en tôle à ressort cintrée de largeur constante, en vue de solliciter élastiquement une ou plusieurs bobines de bande dans la direction de sa position de fonctionnement, des dispositifs de fixation étant prévus dans la zone centrale (20) plate des ressorts de pressage (15, 25) et présentant un espacement par rapport au plan de la zone centrale du ressort, caractérisé par
a) deux bras de ressort (21, 22) cintrés, reliés à la zone centrale du ressort et ayant une courbure (r) continue
b) au moins un passage (16, 24) et une collerette de fixation (17, 17A, 23, 23A) formée en creux et entourant le passage, faisant office de dispositifs de fixation.

2. Ressort de pressage selon la revendication 1, caractérisé en ce que le rayon (r) de la courbure des bras de ressort (21, 22) correspond à peu près à la longueur (l) de la zone centrale (20) plate du ressort..

3. Ressort de pressage selon la revendication 1 ou 2, caractérisé en ce qu'un passage (24), en forme de trou allongé, avec des collerettes (23, 23A) en creux, de forme ovale, est prévu au centre de la zone centrale (20) du ressort.

4. Ressort de pressage selon la revendication 1 ou 2 ou 3, caractérisé en ce que deux passages circulaires (16), avec des collerettes de fixation (17, 17A) circulaires, en creux, sont prévues sur l'axe longitudinal (m) de la zone centrale de ressort (20).

5. Ressort de pressage selon la revendication 1 et une ou plusieurs des revendications 2 à 4, caractérisé en ce que la distance (a) entre la (au moins une) collerette de fixation (17, 17A, 23, 23A) et la face inférieure de la zone centrale (20) du ressort correspond à peu près à une et à trois fois, en particulier à 1,6 fois l'épaisseur (d) de la bande de tôle à ressort.

6. Ressort de pressage selon la revendication 1 et une ou plusieurs des revendications 2 à 5, caractérisé en ce que la caractéristique élastique (figure 7) du ressort de pressage (15, 25) est une droite (G) au moins dans la plage où s'effectuent les flexions réelles des bras de ressort.

7. Ressort de pressage selon la revendication 1 et une ou plusieurs des revendications 2 à 4, caractérisé en ce que la caractéristique élastique (droite G, figure 7) présente une pente d'à peu près 6 % dans la zone des déviations de bras de ressort comprises entre 2 et 7 mm.

8. Cassette à bande, en particulier cassette à bande magnétique vidéo, avec un boîtier (11), sur une paroi (14) de grande dimension duquel un ressort de pressage (15, 25) est fixé directement et centralement, et avec une ou plusieurs bobines de bande magnétique (12, 13), sollicitées élastiquement dans la direction de leur position de fonctionnement, au moyen des ressorts de pressage (15, 25), les ressorts de pressage étant composés d'une bande en tôle à ressort cintrée, de largeur constante, et des dispositifs de fixation étant prévus dans la zone centrale plate, à distance du plan de la zone centrale du ressort, caractérisé par :
a) deux bras de ressort (21, 22) cintrés, se raccordant à la zone centrale du ressort, avec une courbure (r) constante
b) au moins un passage (16, 24) et une collerette de fixation (17, 17A, 23, 23A) formée en creux et entourant le passage, faisant office de dispositifs de fixation.
c) au moins un évidement de logement (30, 31), correspondant à la collerette de fixation (17, 17A, 23, 23A) dans ou sur la paroi de boîtier 114) de grande dimension.

9. Cassette selon la revendication 8, caractérisée en ce que l'évidement de logement (30, 31) est une gorge annulaire prévue autour d'une tige de rivet (25, 27) s'adaptant dans la passage (16, 24) ménagé dans le ressort de pressage (15, 25).

10. Cassette selon la revendication 9, caractérisée en ce que la tige de rivet (26, 27) est d'un volume tel qu'après insertion de la bordure de fixation dans la gorge annulaire et après rivetage, le matériau synthétique (28, 29) de la tige de rivet (26, 27) ne fait plus saillie au-dessus de la surface de la zone centrale (20) du ressort de pressage (15, 25).

11. Cassette selon la revendication 8 ou l'une des revendications 9 et 10, caractérisée en ce que des nervures ou saillies (18) ou bossages sont prévues dans la direction longitudinale axiale sur la paroi (14) de grande dimension et le ressort de pressage (15, 25) est fixé sur la paroi (14) de grande dimension, en les recouvrant.

12. Cassette selon la revendication 11, caractérisée en ce que la longueur totale des nervures, saillies (18) ou bossages correspond à peu près aux trois quarts de la longueur (L) du ressort de pressage (15, 25) à plat.

13. Cassette selon la revendication 11, caractérisée en ce que la longueur totale des nervures, saillies ou bossages correspond à peu près aux quatre cinquièmes de la projection de la longueur (L) du ressort de pressage (15, 25) non chargé, incurvé.

14. Cassette selon la revendication 11 ou 12, caractérisée en ce que la hauteur des nervures, saillies (18) ou bossages situés sur la paroi (14) de grande dimension correspond à peu près à l'espacement (a) entre la collerette de fixation (17, 17A, 23, 23A) et la face inférieure de la zone centrale (20) du ressort.

15. Cassette selon la revendication 8 ou l'une ou plusieurs des revendications 9 à 14, caractérisée en ce que des nervures de renforcement (32A, 32B), présentant un espacement (c) par rapport aux ressorts de pressage (15, 25), sont prévues sur la paroi de boîtier (14) de grande dimension, dans une zone transversale par rapport aux ressort de pressage (15, 25).

16. Cassette selon la revendication 15, caractérisée en ce que les nervures de renforcement (32A, 32B) ont une épaisseur comprise entre à peu près 1 et 2 mm.

17. Cassette selon la revendication 8 ou l'une des revendications 9 à 16, caractérisée en ce que la tige de rivet (32) présente au moins une nervure auxiliaire (31), en particulier trois nervures auxiliaires (31) disposées décalées d'à peu près 120°.

18. Cassette selon la revendication 17, caractérisée en ce que seule l'une de deux tiges de rivet (32, 32') présente au moins une nervure auxiliaire (31).
